# EUROPEAN PATENT SPECIFICATION

(11) **EP 3 662 862 B1**
(45) Date of publication and mention of the grant of the patent: **28.09.2022**
(21) Application number: 18210550.2
(22) Date of filing: 05.12.2018
(51) Int. Cl.: A61C 1/14, A61C 1/12

(54) **DENTAL HANDPIECE AND PUSH BUTTON FOR A DENTAL HANDPIECE**
ZAHNÄRZTLICHES HANDSTÜCK UND DRUCKKNOPF FÜR EIN ZAHNÄRZTLICHES HANDSTÜCK
PIÈCE À MAIN DENTAIRE ET BOUTON POUSSOIR POUR UNE PIÈCE À MAIN DENTAIRE

(43) Date of publication of application: 10.06.2020
(73) Proprietor: Sirona Dental Systems GmbH, 64625 Bensheim (DE); DENTSPLY SIRONA Inc., York, PA 17401 (US)
(72) Inventor: ERTUGRUL, Metin, 64625 Bensheim (DE); REIN, Matthias, 64625 Bensheim (DE)
(74) Representative: Özer, Alpdeniz

(56) References cited:
- EP-A1- 0 526 783
- JP-A- 2001 204 740
- JP-A- 2002 000 621
- JP-B2- 3 795 722
- US-A- 5 779 474
- US-A1- 2012 058 446

## Description

### Field of the Invention

The invention relates to a dental handpiece for alternately receiving rotatable dental tools, e.g. dental drills, and a push button for such a dental handpiece for operating the tool clamping system to clamp and unclamp the rotatable dental tool.

### Background of the Invention

Dental instruments typically include a base station that provides power, water, compressed air, and/or light and supplies those via a supply hose to a dental handpiece. The dental handpiece is typically coupled to a coupling piece by means of a standard interface, e.g. an ISO interface, located at the free end of the supply hose. Typical types of dental handpieces are on the one hand flow-driven dental handpieces, so-called turbines, and on the other hand motor-driven dental handpieces, which are, if they are operated by an electric motor, also referred to as electrical handpieces or electric contra-angles.

US 5,779,474 discloses a sudden stop mechanism and air gap seal for a dental handpiece.

EP 0 526 783 discloses a tool clamping device, and a head equipped with this device for dental handpiece, and a handpiece equipped with this head, wherein the dental handpiece comprises a push-button comprising an outer cover plate and an inner contact element, wherein a circumferential wall extends from the outer cover plate so that the push-button is hat-shaped, wherein the push button has an annular wall at inner side of the outer cover plate forming a recess into which the inner contact element is connected.

A dental handpiece typically comprises a rod-like handle, wherein a head of the dental handpiece with the tool holder is arranged at the front end of the rod-like handle. At the other end of the rod-like handle opposite to the head, a coupling element is arranged for coupling to the coupling piece of the supply hose.

In an electric motor-driven dental handpiece, the electric motor is typically located in the hose-side coupling piece and the rotation of the motor is transmitted to the head via a shaft in the rod-like handle. E.g. a spur gear is located in the head for driving the tool clamping device with the dental tool, e.g. a dental drill, clamped therein.

In a flow-driven dental handpiece, typically a turbine wheel is located in the head, on which compressed air is directed through a compressed air supply line via the supply hose, the coupling, and the rod-shaped handle. The turbine wheel then drives, typically directly coaxially, the tool clamping device with the dental tool. Depending on the design and operating pressure, flow-driven dental handpieces typically reach rotational speeds of about 150,000 to about 450,000 min⁻¹. Typical motor speeds of motorized handpieces are in the range of up to 40,000 min⁻¹, wherein handpieces having different gear ratios, e.g. 1:5, are available so that the rotational speed of the drill can be up to 200,000 min⁻¹.

The head of the dental handpiece comprises a housing in which the tool clamping device, the turbine wheel or gear, the bearings, and the trigger mechanism for the tool clamping device, etc. are arranged. The housing of the head is typically substantially cylindrical and tapers to the side on which the dental tool is clamped. A cover, which is designed as a push button is typically arranged at the axial end of the head which is opposite to the tool holder, and which is referred to herein, without loss of generality, as the upper end. An actuating mechanism to change the dental tools is actuated by the push button. The push button is thus part of a cover system, which is typically fastened to the housing of the head by means of a thread.

The push button acting as an actuation element is typically designed as a hat-shaped metal cap and is mounted axially movable. A spring for generating a bias for the push button is typically located below the push button. By pressing the push button, the push button is moved axially and, after passing through a predefined idle stroke, comes into contact with the trigger mechanism of the tool clamping device, more precisely with a rotatable plunger. Upon further axial displacement of the push button by the user against the bias, the plunger is then moved relative to the shaft and transfers the tool clamping device in a release state in which the drill can be conveniently inserted and removed.

As already stated above, the push button is usually biased by a spring so that it cannot come into contact with the plunger without actuation during the dental preparation. On the other hand, this biasing spring is typically designed relatively soft, so that the operating forces for the user are not unnecessarily high.

Normally, the push button or the actuating mechanism should only be operated when the tool holder stands still. Nevertheless, it can still happen in the preparation that the dentist touches for example the cheek or a tooth of the patient with the push button while the motor is running. Although this is generally undesirable, it may happen that the push button is at least partially actuated against the bias of the spring and in an unfavorable event even to the extent that the push button touches the plunger. The contact between the push button and the plunger produces frictional heat, which is generally undesirable, and which depends on the contact surface, the contact pressure, the surface conditions of the contact surfaces, the speed, and the duration of the contact. This frictional heat can lead to an undesirable increase in temperature of the outer surface of the push button, under certain circumstances already after a relatively short time, typically after a few seconds.

Therefore, it is desirable to provide a construction which prevents excessive temperature rise of the outer surface of the push button even in the event of an unintentional actuation of the push button.

A conceivable possibility would be to make the biasing spring stiffer. However, this has the disadvantage that the actuating forces for the user to change the tools are also increased.

Further, it is known to use a blocking device with a tubular link having, in the vicinity of its end, a ball which is arranged opposite the push button, and which has a support plate for axially contacting the ball for this purpose. However, the contact plate used for this purpose, has a relatively small outer diameter compared to the push button.

Furthermore, in such a construction it is not apparent, if and potentially how a contact between the push button and the contact plate close to the center could be prevented. Even if the heat transfer between the contact plate and the push button would take place on the outermost edge of the contact plate, the frictional heat generated in a presumed contact would be delivered relatively centrally to the push button, since the contact plate is small compared to the push button.

Another solution provides that a spherical element, preferably a ball, is fixedly mounted on the push button, and the clamping device is actuated with the ball. A disc can be used as a counterbearing for the ball. For this purpose, the ball and the disc are made of a material having a high hardness of greater than 2,000 on the Vickers scale, in particular ceramic material. First, it is disadvantageous that the spherical element or the ball requires a highly increased vertical space. If, on the other hand, a very small ball were chosen, the contact forces would be very high.

This could result in a deformation of the counterbearing, if not both parts are made of suitably hard material, such as e.g. technical ceramics. However, this entails a high coefficient of friction, which in turn, disadvantageously, causes a significantly higher temperature development at the contact point. Furthermore, an undesirably high wear can occur.

After all, the previously known systems are in need of further improvement.

### Summary of the Invention

Therefore, it is an object of the invention to provide a dental handpiece in which the temperature increase of surfaces of the push button, which may come into contact with patient tissue, can be kept within acceptable limits, even if the push button might come into contact with rotating parts of the tool clamping system when the dental tool is in rotation, e.g. because the push button is undesirably actuated during operation of a drill.

The objective of the present invention is achieved by the push button of claim 1, and the dental device of claim 2. The dependent claims relate to further developments and embodiments.

Another aspect of the object is to keep away frictional heat, which is generated at the contact point between the push button and rotating parts of the tool clamping system, e.g. the plunger, from the upper side of the cover plate of the push button, if the push button might come into contact with rotating parts of the tool clamping system during rotation of the dental tool.

Another aspect of the object is to provide a dental handpiece which is low in wear, inexpensive to produce, and meets high safety and quality standards.

According to the invention, a dental handpiece is provided having a head for alternately receiving rotatable dental tools. The dental handpiece may be designed as a flow driven handpiece, often referred to as a turbine, or as a motorized or electrical handpiece.

For example, the dental handpiece may comprise a rod-like handle with a head in which a rotatable dental tool, e.g. a dental drill, is clamped, and an interface (e.g. an ISO interface) opposite the head, by means of which the handpiece can be coupled to a supply hose of a base unit, to be supplied by the base unit with energy, compressed air, rotational drive, light and/or water.

The dental handpiece further comprises a housing for accommodating the components of the head, e.g. a tool clamping device for clamping a dental tool to selectively clamp the desired tool, e.g. the desired drill, in the head.

To this, the head comprises a trigger mechanism in the housing, by means of which the clamping of the rotatable dental tool is releasable to allow for insertion of the dental tool into the tool clamping device and to remove it from the tool clamping device. Accordingly, with the trigger mechanism, the tool clamping device can be transferred from an operating state, in which the dental tool is clamped in the tool clamping device to be rotationally driven, to a release state, in which the rotatable dental tool can be inserted and removed.

To this, the desired dental tool is inserted into the housing of the head and thus in the tool clamping device and removed again, e.g. through an opening at the bottom of the housing, when the tool clamping device is in the release state.

The trigger mechanism is operated by means of a manually operable push button. In particular, the push button can be depressed with a finger of the user to actuate the trigger mechanism, i.e. to bring it into the release state, so that the user can insert e.g. a drill or remove the inserted drill.

The push button is double-walled with an outer cover plate and an inner contact element. The upper side of the outer cover plate of the push button serves to actuate the push button by the user, wherein the push button is pressed against a bias or preload which is produced, e.g. by means of a push button spring circumferentially extending around an actuator or plunger. Therefore, the upper side or upper surface of the outer cover plate can principally come into contact with the tissue of the patient during the treatment. When the user presses the push button against the bias or preload, an underside or lower surface of the inner contact element comes into contact with the actuator or plunger and actuates the trigger mechanism with the actuator or plunger upon advancing depression of the push button until the release state of the tool clamping device is reached. Therefore, the actuator or plunger can also be designated as linear actuator, release pin or tappet.

A thermal insulation layer extends sandwich-like between the outer cover plate and the inner contact element and effects a thermal decoupling of the outer cover plate from the inner contact element.

Advantageously, this may reduce the heat flow from the contact point between the inner contact element and the linear actuator or plunger in the axial direction to the outer cover plate of the push button, so that the temperature of the outer cover plate can be kept within acceptable limits, even if the push button might undesirably be actuated so far that it comes into frictional contact with the rotating linear actuator or plunger during the rotation of the tool.

Preferably, the thermal insulation layer is formed as a thermally insulating gap or cavity extending in both dimensions of a plane transverse to the axis of rotation of the rotatable dental tool between an underside or lower surface of the outer cover plate and an upper side or upper surface of the inner contact element. The thermally insulating cavity may be gas filled, according to a simple embodiment e.g. air-filled, or evacuated or filled with a thermal insulation material. E.g. polyetheretherketone (PEEK) or ceramic material with low thermal conductivity may be considered as thermal insulation material for filling.

Preferably, the spatial extension of the thermal insulation layer or the thermally insulating cavity, at least in one direction, preferably in both directions in the plane transverse to the axis of rotation of the rotatable dental tool and the actuator or plunger corresponds to at least 40%, preferably at least 50%, preferably at least 70%, of the (inner) diameter of the push button. This can ensure that the heat generated at the contact point between the inner contact element and the actuator or plunger, can be dissipated preferably far radially outwards. This provides dissipation of the heat in the peripheral area of the push button.

The inner contact element and the thermal insulation layer thus preferably extend into the radial periphery of the push button. As a result, the thermal bridge between the inner contact element and the push button is preferably located in the radial periphery of the push button.

Therewith, in relation to the path that the heat flow must take from the contact point to the center of the outer cover plate, a detour is created, which can slow down the temperature rise there.

Furthermore, a better distribution of the heat energy over the surface of the push button is effected, resulting in a reduction of the local maximum temperature.

When the actuator or plunger rotates and the underside of the inner contact element contacts the rotating actuator or plunger at a contact point, frictional heat is generated involuntarily at the contact point in the inner contact element. This frictional heat is preferably dissipated in the inner contact element from the contact point predominantly radially outwards, i.e. in the plane transverse to the axis of rotation.

Preferably, the push button is hat-shaped, such that a peripheral circumferential wall surrounding the axis of rotation extends downwards from the outer cover plate in the direction of the tool holder. The inner contact element preferably extends into the peripheral region of the outer cover plate, if appropriate, up to the circumferential wall.

If the inner contact element extends radially far outward, if appropriate up to the circumferential or annular wall, and abuts on the annular wall or is joined to the push button at or in the vicinity of the annular wall, the heat can be dissipated up to this radially outer region.

The thermal insulation layer or the thermally insulating gap or cavity extends in an advantageous manner also into the radial periphery or the peripheral edge region of the hat-shaped push button, if appropriate up to the circumferential wall or circumferential ring wall.

Accordingly, the thermal coupling of the inner contact element to the push button is located in a region of the push button, where a patient contact is relatively unlikely. The path for the generated heat up to the outer cover plate is lengthened and thus slows down an increase in temperature on the upper side of the push button.

Preferably, the thermal insulation layer has a diameter of at least 2 mm, preferably at least 3 mm, preferably at least 4 mm, in the plane transverse to the axis of rotation. For example, the thermal insulation layer has a diameter of 4.7 mm +/- 1 mm in the plane transverse to the axis of rotation. Further preferably, the inner contact element has a diameter of at least 2 mm, preferably at least 3 mm, preferably at least 4 mm in the plane transverse to the axis of rotation. For example, the inner contact element has a diameter of 5.8 mm +/-1 mm in the plane transverse to the axis of rotation.

Preferably, the inner contact element extends radially at least so far outward, or has a diameter which is at least so large, that the spring engages the inner contact element from below.

Further preferably, the material and the thickness of the inner contact element are selected or dimensioned such that the inner contact element does not bend upon actuation or at least such that the inner contact element does not touch the outer cover plate. For example, the thermal insulation layer, e.g. the air gap, has a thickness of 0.12 mm and the inner contact element has a thickness of 0.4 mm.

According to a preferred embodiment, the material and the machining of the inner contact element and/or of the actuator or plunger are selected such that the inner contact element and/or the actuator or plunger have a surface roughness with an average or mean surface roughness (Rz) of Rz < 3.5 µm, preferably Rz < 2.5 µm, preferably in the range of Rz = 1.5 µm +/-1 µm at the contact point. Further preferably, the profile depth (Pt) of the inner contact element and/or of the actuator or plunger is Pt < 6 µm, preferably Pt < 4.5 µm, preferably in the range of Pt = 3 µm +/-1.5 µm at the contact point.

Further preferably, at the contact point of the underside of the inner contact element with the actuator or plunger, the sliding (kinetic) friction coefficient µ (dry) is less than or equal to 0.3, preferably less than or equal to 0.25, preferably in the range of 0.18 +/- 0.05. In operation, however, the area in the push button is typically lubricated so that the friction levels in operation with lubrication are lower.

The use of material and processing technology to achieve a low surface roughness and low profile depth or having a low coefficient of sliding (kinetic) friction µ (dry) has the advantage that the wear can still be kept low even with repeated actuation with a rotating motor or drive. The solution presented here can thus synergistically reconcile opposed requirements, such as low heating of the outer cover plate and wear resistance.

The heating of the outer cover plate can be further kept low, if the inner contact element is made of a material having a thermal conductivity of less than or equal to 30 W/(mK), preferably in the range between 10 W/(mK) and 25 W/(mK), preferably in the range of 15 W/(mK) +/- 5 W/(mK).

In the context of the present invention it is possible to produce the inner contact element out of metal, for example out of acid- and rust-resistant steel. According to a preferred embodiment, the inner contact element consists of a steel with a martensitic structure. Also, the head of the actuator or plunger, which forms the upper end of the actuator or plunger and which comes into contact with the inner contact element, may be made out of metal, for example of acid- and rust-resistant steel. Thus, a metal-to-metal contact can be provided at the contact point between the inner cover plate and the actuator or plunger. For example, the inner contact element made out of metal directly contacts and actuates the head of the actuator or plunger without the need for additional spherical elements. Steel with martensitic structure and a hardness of about 760 +/- 50 HV3 is particularly preferred for the inner contact element.

The underside of the inner contact element and/or the upper end of the actuator or plunger are preferably machined by a turning lathe, at least by means of normal turning, but more preferred by precision turning.

This has the advantage that the sliding friction or kinetic friction is relatively low and the arrangement is low-wear and therefore durable. Furthermore, the production is simple and inexpensive.

Accordingly, the material of the inner contact element may have a hardness which is high compared to other metals, but relatively low compared to some other materials.

The Vickers hardness of the material of the inner contact element and/or the upper end of the actuator or plunger may be ≤ 1500 HV3, preferably ≤ 1200 HV3, preferably ≤ 900 HV3, preferably ≥550 HV3, preferably ≥700 HV3, e.g. in the range from 550 HV3 to 850 HV3, particularly preferred materials are in the range between 700 HV3 and 800 HV3.

Advantageously, an unacceptable plastic deformation of the contact area or the formation of an actuator or plunger impression at the contact point can be avoided. Therewith, the formation of an excessively enlarged contact surface can be avoided, whereby an increase of the heat development at the contact point can be kept within acceptable limits.

The inner contact element may be etched, e.g. as a contact plate out of a sheet metal foil, preferably out of a stainless steel foil, preferably out of a sheet metal foil of martensitic stainless steel, which is easy to manufacture. Furthermore, the use of such a sheet metal part or stainless steel sheet part is inexpensive.

Furthermore, the use of metal or stainless steel allows economical assembly, e.g. by pressing or welding the inner contact element in the push button.

The thickness (dimension along the axis of rotation) of the inner contact element at the contact point between the inner contact element and the rotating actuator or plunger is preferably less than or equal to 1 mm, preferably less than or equal to 0.6 mm, preferably less than or equal to 0.5 mm, preferably between 0.1 mm and 0.6 mm, preferably in the range of 0.4 mm +/- 0.2 mm or +/- 0.1 mm.

Furthermore, the thickness (dimension along the axis of rotation) of the thermal insulation layer or of the thermally insulating gap or cavity, in particular in the region of the axis of rotation, is preferably less than or equal to 0.5 mm, preferably less than or equal to 0.3 mm, preferably less than or equal to 0,2 mm, preferably between mm and 0.2 mm, preferably in the range of 0.12 mm +/- 0.05 mm or +/- 0.03 mm.

Advantageously, the additionally introduced element in the form of the inner contact element and the thermal insulation layer or cavity generate only a slight increase in the height of the head, so that the overall height can be kept low.

Preferably, the sum of the thicknesses of the inner contact element and the thermal insulation layer is preferably less than or equal to 1.5 mm, preferably less than or equal to 1 mm, preferably less than or equal to 0.75 mm, preferably less than or equal to 0.6 mm, preferably in the range of 0.5 mm +/- 0.15 mm.

All the aforementioned thickness values relate in particular to the central or near-axis region of the push button, in particular to the contact point with the head of the actuator or plunger.

If the inner contact element is made as a metal part which is separate from the outer cover plate, it can preferably be joined to the outer cover plate or other parts of the push button by a material bond, for example by welding, or by press-fit, or the inner contact element can be positively connected with the outer cover plate or other parts of the push button.

If the inner contact element is designed as a separate part from the outer cover plate, the push button preferably has an annular stop on the outer cover plate, in particular in the peripheral region of the outer cover plate, or on the circumferential (annular) wall. The inner contact element then rests against the annular stop, so that the thermally insulating cavity or gap is formed in the interior region of the annular stop.

The inner contact element may either lie loose in the hat shaped push button and may be pushed against the annular stop by a spring, in particular by the spring which generates the bias of the push button for the operation of the trigger mechanism. On the other hand, the inner contact element may be pressed into the hat-shaped push button by means of a press-fit or may be joined to the hat-shaped push button by a material bond, for example by welding. In either case, a thermal bridge is created between the peripheral region of the inner contact element and the annular stop so that the heat which is conducted radially outwardly in the inner contact element is dissipated via the thermal bridge to the annular stop and from there into the peripheral outer region of the push button.

According to a preferred embodiment, the inner contact element may have a peripheral support ring, a central actuation field and a plurality of spokes, wherein the central actuation field is suspended by means of the spokes in the peripheral support ring, so that recesses exist between the spokes. Further preferably, the spokes may run not radially straight, but may be e.g. S-shaped, to increase the length of the path for the heat flow from the contact point between the actuator or plunger and the inner contact element to the peripheral support ring.

A further subject matter of the invention is the push button adapted for installation in the head of the dental handpiece for alternately receiving dental tools and for actuating a trigger mechanism in the head for clamping and releasing a dental tool, wherein the push button is double-walled with an outer cover plate and an inner contact plate, wherein an upper side of the outer cover plate is pressable against a bias by the user for actuating the push button, and thereby an underside of the inner contact element actuates an actuator or plunger to actuate the trigger mechanism, when the push button is installed in the head of the dental handpiece, wherein a thermal insulation layer, which effects a thermal decoupling of the outer cover plate from the inner contact element, extends in a sandwich-like manner between the outer cover plate and the inner contact element.

If appropriate, such a push button can be installed as retrofit component in already existing handpieces. This seems possible in particular due to the low overall height of the present construction.

In the following the invention will be explained in more detail by means of exemplary embodiments and with reference to the figures, wherein identical and similar elements are partially provided with the same reference numerals, and wherein the features of different embodiments may be combined.

### Brief Description of the Figures

It is shown in:
- FIG. 1: a schematic view of a handpiece coupled to a supply hose,
- FIG. 2: a cross section through a handpiece according to an exemplary embodiment of the invention,
- FIG. 3: an enlarged cross-section through the head of the handpiece of FIG. 2,
- FIG. 4: a cross-sectional view of the push button of FIGS. 2 and 3,
- FIG. 5: a schematic cross section through the upper region of the head according to a further embodiment of the invention,
- FIG. 6: a schematic cross-section through the head of FIG. 5 with a partially pressed push button,
- FIGS. 7-13: schematic cross sections through push buttons according to further embodiments of the invention,
- FIG. 14: a schematic plan view of an inner contact element according to a further embodiment of the invention, and
- FIG. 15: a schematic view of a dental treatment unit.

### Detailed Description of the Invention

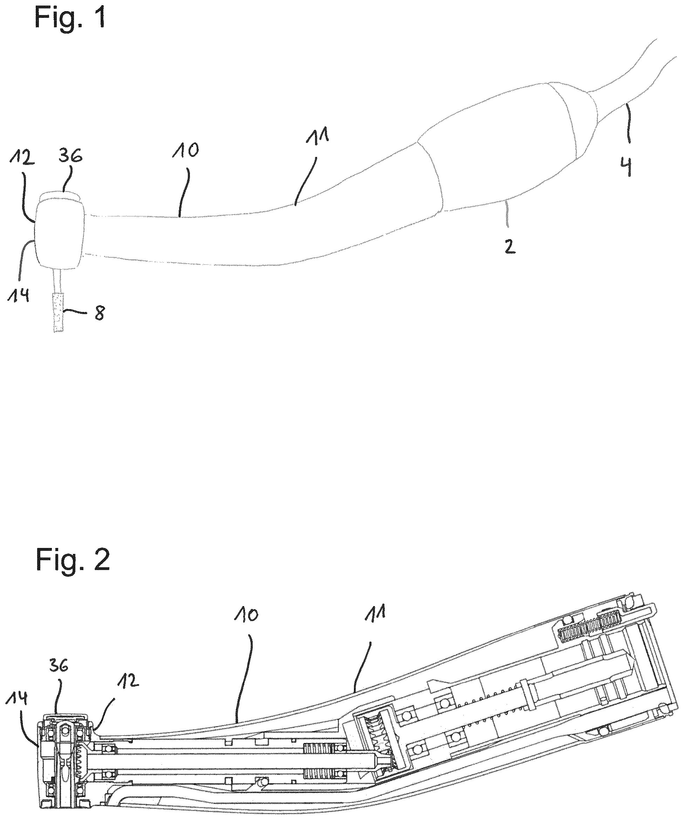

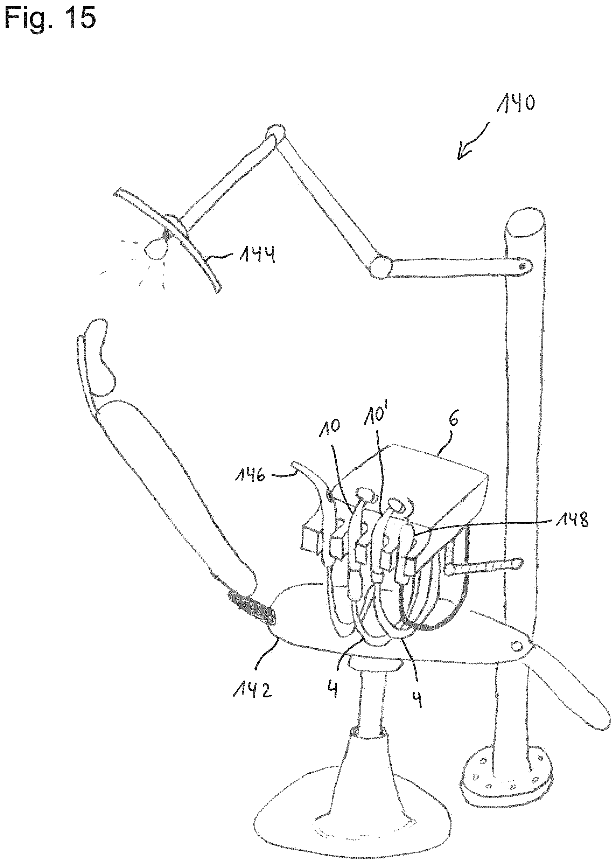

Referring to **FIG. 1****,** the dental handpiece 10 is coupled to a coupling piece 2 by means of a standard interface, e.g. an ISO interface. The coupling piece 2 is located at a free end of the supply hose 4 of a base unit 6 (see **FIG. 15****).** A dental tool 8, in this example a dental drill, is inserted into the dental handpiece 10.

Referring to **FIGS. 1 and 2****,** the dental handpiece 10 comprises a rod-like handle 11 and a head 12, which is attached to the distal end of the dental handpiece 10 or the rod-like handle 11. The head 12 comprises a generally cylindrical housing 14, which is tapered at its lower end, and in which the tool clamping device 16 and other components of the tool drive are installed.

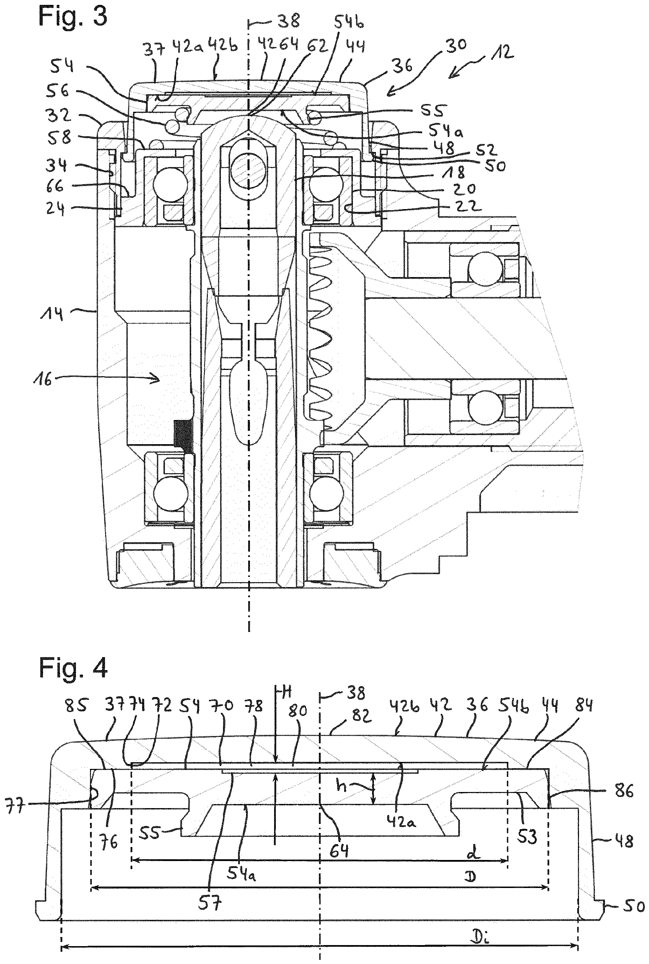

Referring to **FIG. 3****,** a linear actuator or plunger 18, as part of the tool clamping device 16, is mounted by means of ball bearings 20 in a ball bearing receiving sleeve 22 of a holder 24. The usual construction of a head of a dental handpiece with a corresponding tool clamping device is generally known to the person skilled in the art.

At the upper end of the head 12 is a cover system or lid system 30 with a threaded sleeve 32 which is screwed into an internal thread 34 of the head housing 14 from above. In the threaded sleeve 32, a cover or lid is used as a push button 36, which is axially (relative to the axis of rotation 38 of the tool) displaceable or movable. In this example, the cover or push button 36 is hat-shaped with an upper or outer cover wall or plate 42, which is slightly curved to the outside on the upper side in this example, and with an annular wall 48 or jacket, which adjoins the peripheral edge portion 44 of the outer cover plate 42 and extends axially with respect to the axis of rotation 38 downwardly from the peripheral edge portion 44. At the lower end of the annular wall 48, which is the free end of the annular wall 48 opposite to the outer cover plate 42, the annular or circumferential wall 48 has an outer collar or stop ring 50 which, in this example, provides an upper stop against an inner stop ring 52 of the threaded sleeve 32, and which holds the lid or push button 36 in the head housing or in the threaded sleeve 32.

The push button 36 is double-walled in a plane transverse to the axis of rotation 38, wherein the outer cover plate 42 forms a first layer of the two layers of the double wall. The second layer of the two layers of the double wall is formed by an inner contact member or inner contact element 54, in this example in the form of an inner contact plate, which is inserted from below into the hat-shaped cover or push button 36. The push button 36 is biased by a coil spring 56, which is supported at its lower end on an end plate 58 and at its upper end at the underside 54a of the inner contact plate 54. More generally, the spring 56 engages the inner contact element or plate 54. The bias of the spring 56 results in an actuating force for the push button 36 approximately in the range of 1N to 5N in the idle stroke range until touching the plunger head 62. The actuating force for actuating the trigger mechanism, however, is about 50N.

To clamp the dental tool 8, the user typically pushes with a finger on the upper side 42b of the outer cover plate 42 to depress the push button 36 axially against the bias of the push button spring 56. In doing so, the user first overcomes the idle stroke between the underside 54a of the inner contact plate 54 and the plunger head 62, which forms the free upper end of the plunger 18, until the underside or lower surface 54a contacts the free upper end of the plunger 18. As the plunger head 62 or the free upper end of the plunger 18 is formed convexly, a relatively small contact point 64 between the inner contact plate 54 and the plunger head 62 is created. If the user pushes the push button 36 further down, the push button 36 actuates the plunger 18, i.e. pushes the plunger 18 downwards, by means of the pressure of the inner contact plate 54 on the plunger head 62, whereby the trigger mechanism of the tool clamping device 16 is actuated. When the trigger mechanism of the tool clamping device 16 is actuated, the tool clamping device 16 is in a release state (not shown) in which the dental tool 8, e.g. a dental drill, can be inserted or removed in the tool clamping device 16 (not shown).

An outer collar 66 on the ball bearing sleeve 22 forms a lower stop for the push button 36, which is put like a hat over the ball bearing sleeve 22 and on further actuation over the ball bearing 20.

In the present exemplary embodiment, the outer cover plate 42 has, on its underside 42a, a recess 70 with a diameter d = 4.7 mm. The diameter of the inner contact plate 54 in this example is D = 5.8 mm.

The central recess 70 is bounded outwards by a peripheral circumferential shoulder or ledge 72, so that an annular step 74 is formed at the outer circumference of the recess 70. Accordingly, the underside or lower surface 42a of the outer cover plate 42 has a peripheral support or bearing surface 76 for the inner contact plate 54. Accordingly, the inner contact plate 54 peripherally annularly engages the outer cover plate 42 from below and thereby forms the inner second layer of the double wall in the centrally double walled region of push button 36.

Thus, the recess 70 forms a central gap or cavity 78 which extends in both dimensions in the plane transverse to the axis of rotation 38 between the outer cover plate 42 and the inner contact plate 54. In the present example, the cavity 78 is unfilled, i.e. air under atmospheric pressure is present in the cavity 78. Thus, the cavity 78 forms a thermal insulation layer 80, which extends flatly in the two dimensions of the plane transverse to the axis of rotation 38 between the outer cover plate 42 and the inner contact plate 54, and effects a thermal insulation against heat flow from the inner contact plate 54 to the outer cover plate 42 in a central region 82 of the push button 36. The contact between the inner contact plate 54 and the peripheral annular support or bearing surface 76 creates a thermal bridge 84 from the inner contact plate 54 to the push button 36 or, in this example, to the outer cover plate 42. Thus, the thermal bridge 84 is not in the central or near-axis region 82 of the push button 36 or the outer cover plate 42, but in the peripheral edge portion or region 44 of the outer cover plate 42, i.e. in the radial periphery 37 of the push button 36.

If the push button 36 is undesirably actuated during rotation of the plunger 18, e.g. accidentally actuated so far that the inner contact plate 54 might come into contact with the plunger head 62 at the central contact point 64, frictional heat is initially generated at the central contact point 64. The thermal conductivity of the material of the inner contact plate 54 is higher than the thermal conductivity of the thermal insulation layer 80, which is, in this example, an air layer. Therefore, the frictional heat generated at the contact point 64 is guided predominantly or essentially radially outwards within the inner contact plate 54. The annular contact region 85 between the upper side or upper surface 54b of the inner contact plate 54 and the outer cover plate 42, which forms the thermal bridge 84 between the inner contact plate 54 and the push button 36, is located peripherally relatively far away from the rotation axis 38 so that the generated frictional heat is distributed peripherally on a relatively large perimeter into the peripheral edge region 44 of the outer cover plate 42. This provides, inter alia, that the maximum temperature of the upper side or upper surface 42b of the outer cover plate 42 remains within acceptable limits in the areas which are in danger of being touched. In the example shown in FIGS. 2-4, the thermal bridge 84 is located radially outside of the inner diameter of the bearing 20 or radially outside of the diameter of the plunger 16.

In other words, the inner contact element 54 and the thermal insulation layer 80 extend radially into the radial periphery 37 of the push button 36, so that the thermal bridge 84 is located in the radial periphery 37 of the push button 36.

In the present example, the diameter d of the thermal insulation layer 80 is about 75% of the inner diameter Di of the push button 36. Preferably, this ratio d/Di may be at least 40%, at least 50% or at least 70%.

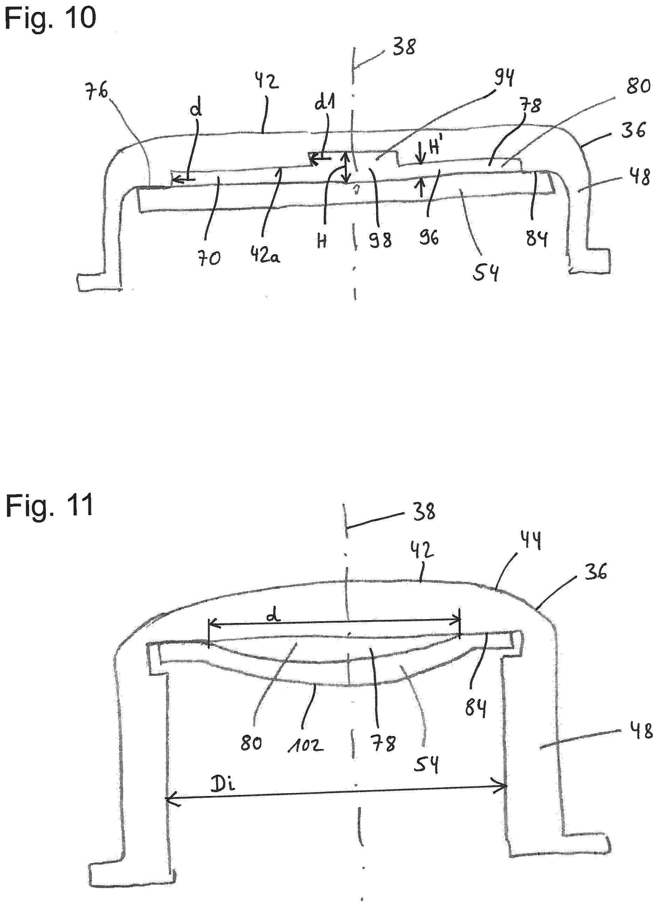

In the example shown in **FIGS. 2-4****,** the inner contact plate 54 is made of stainless steel, in the present example made of hardened, acid- and rust-resistant martensitic steel, which allows easy manufacture. In this example, the thickness of the inner contact plate 54 is approximately h = 0.4 mm in the central region, in particular in the region of the contact point 64. In an annular peripheral portion or region 53, the thickness of the inner contact plate 54 is somewhat reduced in this example. In this example, the thickness H of the thermal insulation layer 80 or the height of the recess 70 is about 0.12 mm in the central region 82. Thus, the overall height caused by the inner contact plate 54 and the thermal insulation layer 80 is only increased by about 0.52 mm in this example. In the present example, the upper side 54b has a slight central thinning 57, which contributes to the thickness H of the thermal insulation layer 80 in the central region 82. The thinning 57 in the central region of the inner contact plate 54 and a second central recess 94 in the outer cover plate 42 (see **FIG. 10****),** which forms a thinning of the outer cover plate 42, provide a further safety margin against deformation of the inner contact plate 54 or the outer cover plate 42. Therewith, an undesirable contact between the inner contact plate 54 and the outer cover plate 42 in the central region 82 of the push button 36 can be prevented even better.

The use of an acid- and rust-resistant martensitic stainless steel for the inner contact plate 54 advantageously provides a high strength or stability against deformation with a comparatively small thickness h. Furthermore, such a martensitic steel advantageously has a smooth or even surface, so that a relatively lower coefficient of friction is provided at the contact point 64 with the plunger head 62. The plunger head 62 is also made of an acid- and rust-resistant steel, so that in this example there is a steel-to-steel contact at the central contact point 64. In particular, the inner contact plate 54 directly contacts and actuates the plunger head 62 without the need for additional spherical elements. As a result, the heat development can be reduced already at the contact point 64 with respect to materials having a higher coefficient of friction. In addition, the inner contact plate 54 made of such a martensitic steel is easy to process and may be produced precisely and inexpensively by etching. At the same time, the acid- and rust-resistant, preferably martensitic, steel used for this example has a coefficient of thermal conduction A = 15 W/(mK), which is relatively low compared to other steels.

In particular, the relatively low thermal conductivity, the low coefficient of friction and the predominantly radial heat dissipation into the peripheral edge region 44 or in the radial periphery 37 of the push button 36 synergistically interact, so that the maximum temperature at points of the push button 36, which are in danger of being touched, can be kept within acceptable limits even at a long-term contact of the inner contact plate 54 with the plunger head 62 under the maximum possible contact pressure.

In the push button 36, the inner contact plate 54 engages the peripheral bearing surface 76, which surrounds the cavity 78 and forms a peripheral annular stop. In this example, the annular wall 48 or jacket of the push button 36 has a peripheral shoulder or ledge 77 which centers the inner contact plate 54 and forms an annular press fit or interference fit 86. In this example, the inner contact plate 54 has on its underside 54a an annular extension 55, which centers the spring 56, but may also contribute to increase the flexural rigidity of the inner contact plate 54.

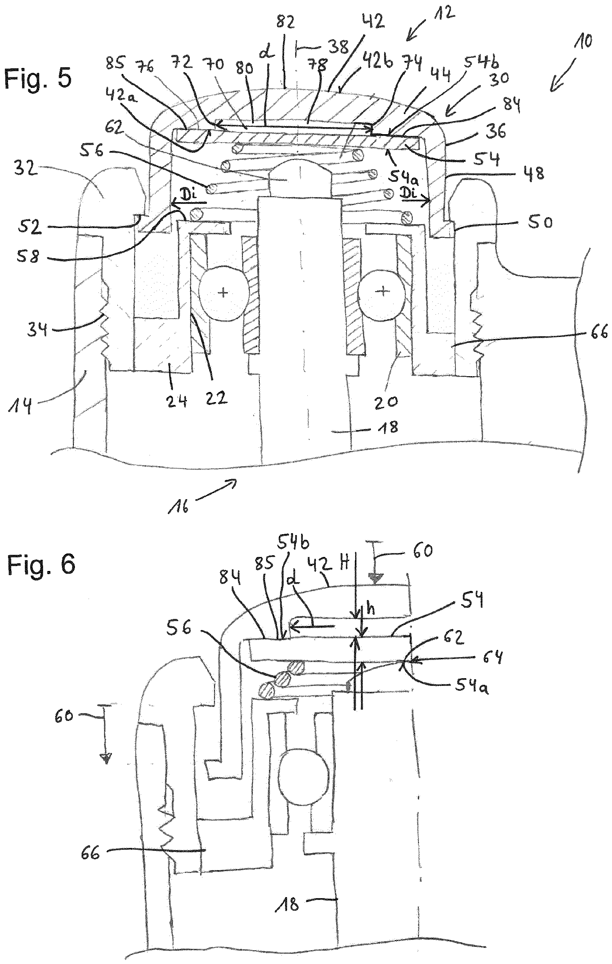

**FIG. 5** shows schematically a simplified embodiment comprising a flat or planar inner contact plate 54 without the annular extension 55 and comprising a push button 36 without the peripheral shoulder or ledge 77. In this example, the inner contact plate 54 lies only loosely in the push button 36 at the peripheral bearing surface 76,which surrounds the cavity 78 and forms a peripheral annular stop. In the illustrated assembled state, the inner contact plate 54 is biased or pressed by the spring 56 against the peripheral annular stop 76 or peripheral bearing surface of the underside 42a of the outer cover plate 42.

Referring to **FIG. 6****,** illustratively, the push button 36 of **FIG. 5** is actuated about the axial idle stroke 60 so that the inner contact plate 54 contacts the plunger head 62, however, the plunger 18 has not yet actuated the trigger mechanism.

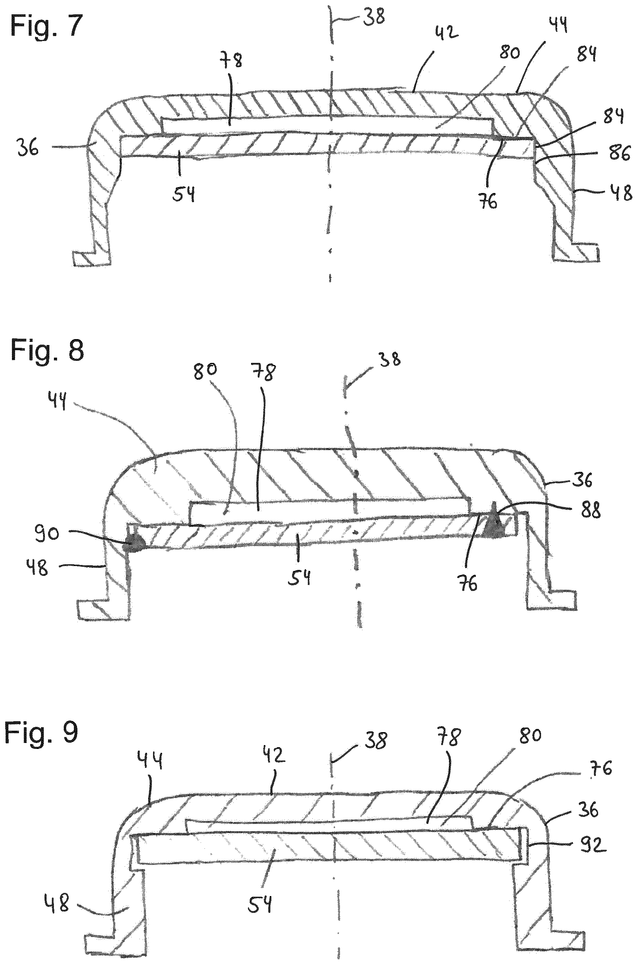

Referring to **FIG. 7****,** the push button 36 also has an annular press fit 86 such that the inner contact plate 54 is press fit from below into the inner press fit or interference fit 86 in the push button 36. Also in the examples with the interference fit 86, the thermal contact, i.e. the thermal bridge 84 between the inner contact plate 54 and the push button 36 is located substantially in the peripheral edge region 44, namely substantially via the press fit 86 and the annular peripheral bearing surface 76. Otherwise, the embodiment corresponds to that in **FIG. 5****.**

Referring to **FIG. 8****,** the inner contact plate 54 may be joined to the push button 36 by a material bond, for example by welding. The inner contact plate 54, e.g. may be welded annularly with the peripheral bearing surface 76 or annular stop, as symbolized at the reference numeral 88 as a welding seam, or be welded radially to the circumferential annular wall 48, as symbolized at the reference numeral 90 as a welding seam. Laser welding is considered as the preferred welding method.

Referring to **FIG. 9****,** the inner contact plate 54 may be positively locked or form-locked in a radial annular groove 92. Also in this embodiment, the thermal bridge 84 is created exclusively in the peripheral edge region 44 of the outer cover plate 42.

Referring to **FIG. 10****,** the gap or cavity 78 or the thermal insulation layer 80 may be formed by two or more steps. For this purpose, the outer cover plate 42 may have on its underside 42a a first recess 70 with a comparatively large diameter d and a second central recess 94 with a smaller diameter d1. Accordingly, the thermal insulation layer 80 has a thickness H' in an annular portion 96 and a thickness H in a central portion 98, wherein the thickness H is larger than the thickness H'. In addition to the predominantly radial dissipation of the frictional heat by means of heat conduction within the inner contact plate 42 this provides a reduction of heat transfer from the inner contact plate 54 to the central or near-axis region 82 of the outer cover plate 42.

Referring to **FIG. 11****,** the inner contact element 54 is curved and has a central convex portion or dome 102 which extends away from the outer cover plate 42 to form the central cavity 78 or the thermal isolation layer 80 under the dome. Also in this example, the thermal bridge 84 is located in the peripheral edge region 44 of the outer cover plate 42. In this example, the diameter d of the cavity 78 or the thermal insulation layer 80 corresponds to about 80% of the inner diameter Di of the push button 36.

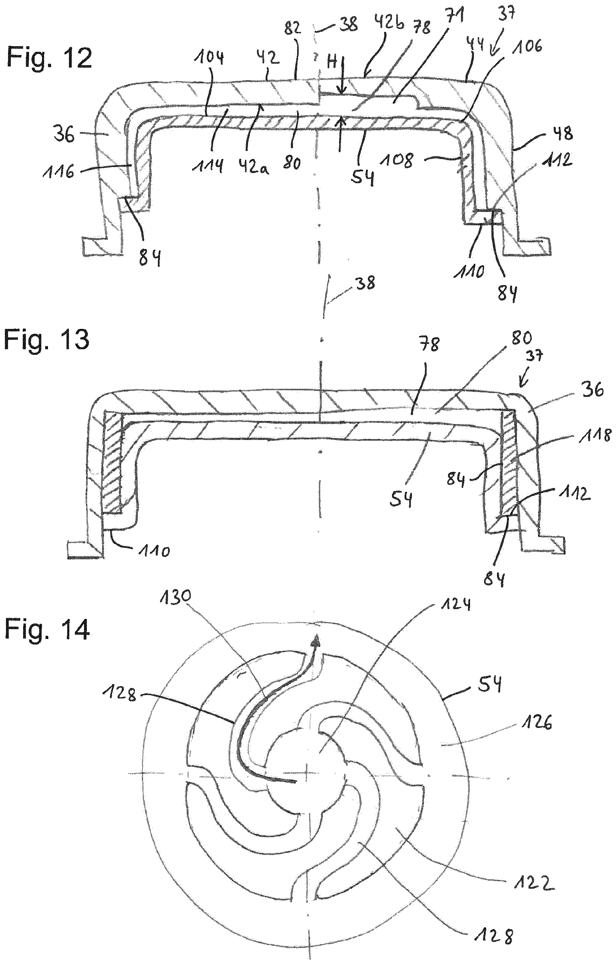

Referring to **FIG. 12****,** the inner contact element 54 may be hat-shaped like the push button 36. In this example, the inner contact element 54 has a cover plate 104 extending in the plane transverse to the axis of rotation 38 and a peripheral annular wall 108 adjoining the peripheral edge 106 of the cover plate 104 and extending axially downwards. At the lower end of the peripheral annular wall 108 a circumferential and radially outwardly extending collar 110 is arranged. The circumferential collar 110 axially abuts from below against an annular stop 112 of the peripheral annular wall 48 of the push button 36. Thus, the circumferential annular stop 112 is axially offset downwardly with respect to the underside 42a of the horizontal outer cover plate 42. Again, the inner contact element 54 may be loosely inserted into the push button 36, may be welded to the annular stop 112, may be press-fitted or may be latched with positive locking. Due to the axial offset of the thermal bridge 84 created between the collar 110 and the annular stop 112, the thermal bridge 84 between the inner contact element 54 and the push button 36 and, therewith, the heat dissipation onto the push button 36 are displaced even further radially outwards and additionally axially downwards. This delays the heat transport, and the heat energy which is transmitted onto the push button 36 via the thermal bridge 84 spreads further away from the central region 82 of the push button 36 or the upper side 42b of the outer cover plate 42.

In this example, the gap or cavity 78 between the inner contact element 54 and the push button 36, forming the thermal insulation layer 80, also has two areas, namely a base portion 114 extending in the plane transverse to the axis of rotation 38 and a jacket area or shell portion 116 located between the peripheral annular walls 48 and 108. In other words, in this example, the thermal insulation layer 80 is also hat-shaped.

Optionally, the outer cover plate 42 may have a thinning 71, which increases the thickness H of the thermal insulation layer 80 and forms a safety margin against deformation.

In the embodiment of **FIG. 12****,** the outer hat-shaped part of the push button 36 is integrally formed, wherein the annular stop 112 is provided as an annular recess in the annular wall 48.

Referring to **FIG. 13****,** the annular stop 112 may be provided by a spacer ring 118 inserted into a conventional push button 36. This embodiment has the advantage that the design of the push button 36 need not to be changed relative to conventional handpieces, which may provide advantages in the production.

Referring to **FIGS. 12 and 13****,** the inner contact element 54 is made as a metal turned part in these examples. In the embodiments of **FIGS. 12 and 13****,** the thermal bridge 84 between the inner contact element 54 and the push button 36 is also located in the radial periphery 37 of the push button 36, but not on the outer cover plate 42, but in the area of the circumferential annular wall 48, i.e. in the jacket area of the push button 36.

Referring to **FIG. 14****,** the heat dissipation within the inner contact element or the inner contact plate 54 may be further reduced by recesses 122 in the inner contact element 54. In this exemplary embodiment, the inner contact plate 54 has a central actuation portion 124, which actuates the plunger head 62, and a peripheral support ring 126. The central actuation portion 124 is connected to the peripheral support ring 126 by means of a plurality of spokes 128, in this example four spokes 128. Recesses 122 are located between the spokes 128. In this example, the spokes 128 are not radially straight, but are curved to lengthen the path for the heat flow I 130 from the central actuation portion 124 to the peripheral support ring 126.

Although the use of hardened martensitic stainless steel for the inner contact plate 54 has advantages due to the low coefficients of friction with the plunger head 62, it shall not be excluded that the inner contact element or inner contact plate 54 may be made out of austenitic (acid and rust-resistant) steel or out of a ceramic material. Although, ceramic materials typically provide a higher coefficient of friction, this may nevertheless be acceptable, if the thermal bridge 84 between the inner contact plate 54 and the push button 36 is located in the radial periphery 37 of the push button 36.

Referring to **FIG. 15****,** the supply hose 4 is connected to a base unit 6 of a dental treatment unit 140, which also includes a treatment chair 142 and a patient lighting 144. The base unit 6 supplies several, in this example two, dental handpieces 10, 10' with compressed air, electrical energy, light and/or water. For example, the first handpiece 10 is a motor-driven or electrical handpiece and the second handpiece 10' is a flow-driven or air-driven handpiece. The base unit 6 also supplies a sprayvit 146 and an ultrasonic scaler 148.

It should be noted that the directional information like above or below, left or right, are not absolute, but refer to the orientation shown in the figures of the dental handpiece 10 and push button 36, in which the push button 36 is located above and the clamped dental tool 8 is located below.

It is apparent to those skilled in the art that the above described embodiments are to be understood as exemplary and that the invention is not limited to these embodiments but may be varied in many ways without departing from the scope of the claims. Furthermore, it will be understood that the features, whether disclosed in the specification, the claims, the figures, or otherwise, do individually define essential components of the invention, even if described together with other features. Thus, every such feature is to be understood to be disclosed separately and independent of each other. The description of features of each embodiment also applies to each of the other embodiments.

### List of Reference Numerals:

2 coupling piece
4 supply hose
6 base unit
8 dental tool
10 dental handpiece
11 rod-like handle
12 head
14 housing
16 tool clamping device
18 actuator, plunger, release pin, or tappet
20 ball bearing
22 ball bearing receiving sleeve
24 holder
30 cover system
32 threaded sleeve
34 internal thread
36 push button
37 radial periphery
38 axis of rotation
42 outer cover plate
42a underside of the outer cover plate
42b upper side of the outer cover plate
44 peripheral edge region
48 circumferential or annular wall
50 stop ring of the annular wall
52 stop ring of the threaded sleeve
53 annular peripheral region
54 inner contact element, inner contact plate
54a underside
54b upper side
55 annular extension
56 spring
57 central thinning
58 end plate
60 idle stroke
62 actuator/plunger head
64 contact point
66 outer collar
70 recess
71 thinning
72 circumferential shoulder or ledge
74 annular step
76 peripheral bearing surface, annular stop
77 peripheral shoulder or ledge
78 gap, cavity
80 thermal insulation layer
82 central region of the push
84 thermal bridge
85 annular contact region
86 annular interference
88 welding seam
90 welding seam
92 annular groove
94 second central recess
96 annular portion fit ≥≤≤button
98 central portion of the thermal insulation layer
102 dome
104 cover plate
106 peripheral edge of the cover plate
108 peripheral annular wall
110 collar
112 annular stop
114 base portion of the thermal insulation layer
116 shell portion
118 spacer ring
122 recesses
124 central actuation portion
126 peripheral support ring
128 spokes
130 heat flow
140 dental treatment unit
142 treatment chair
144 patient illumination
146 sprayvit
148 ultrasonic scaler

## Claims

1. A manually operable push button (36) being adapted for installation in a head (12) of a dental handpiece (10),
wherein the push button (36) is double-walled with an outer cover plate (42) and an inner contact element (54),
wherein the push button (36) is hat-shaped such that a circumferential wall (48) extends from the outer cover plate (42),
wherein the push button (36) has an annular stop (76, 112) at the outer cover plate (42) or at the circumferential wall (48),
wherein a thermal insulation layer (80) is formed by a central gap (70) between the outer cover plate (5) and the inner contact plate (54), such that the thermal insulation layer (80) extends between the outer cover plate (42) and the inner contact element (54) effecting a thermal decoupling of the outer cover plate (42) from the inner contact element (54), when the inner contact element (54) rests on the annular stop (76, 112),
wherein the inner contact element (54) is made as a separate part from the outer cover plate (42),
wherein the inner contact element (54) loosely lies in the hat-shaped push button (36), or the inner contact element (54) is pressed in the hat-shaped push button (36) by means of a press-fit, or the inner contact element (54) is joined to the hat-shaped push button (36) by a bonded joint, for example by welding, and
such that when frictional heat is generated in the inner contact element (54) it is dissipated in the inner contact element (54) predominantly radially outward.

2. Dental handpiece (10) having a head (12) for receiving rotatable dental tools, comprising:
a housing (14) for accommodating components of the head (12),
a tool clamping device (16) accommodated by the housing (14) for clamping a dental tool such that the clamped dental tool is rotatably drivable in the head (12),
a trigger mechanism for releasing the clamping of the rotatable dental tool in order to insert the dental tool into the tool clamping device (16) and to remove the dental tool from the tool clamping device (16),
a bias (56) adapted to push the inner contact element (54) against the annular stop (76, 112),
a manually operable push button (36) **according to claim 1** for actuating the trigger mechanism,
wherein for actuating the push button (36) an upper side (42b) of the outer cover plate (42) is pressable by a user against the bias, thereby actuating a rotating actuator (18) by an underside (54a) of the inner contact element (54) to actuate the trigger mechanism,
wherein the frictional heat which is generated in the inner contact element (54) when the inner contact element (54) contacts the rotating actuator (18) at a contact point (64), is dissipated in the inner contact element (54) predominantly radially outward from the contact point (64).

3. Dental handpiece (10) according to claim 2, wherein the thermal insulation layer (80) is provided in the form of a thermally insulating gap (78) which extends in a plane transverse to the axis of rotation (38) of the rotatable dental tool between an underside (42a) of the outer cover plate (42) and an upper side (54b) of the inner contact element (54).

4. Dental handpiece (10) according to one of claims 2 or 3, wherein the spatial extension of the thermal insulation layer (80) in at least one direction of a plane transverse to the axis of rotation (38) of the rotatable dental tool corresponds to at least 40%, preferably at least 50%, preferably at least 70%, of the diameter of the push button.

5. Dental handpiece (10) according to one of claims 2 to 4, wherein the material and the processing of the inner contact element (54) and/or the rotating actuator (18) are selected such that the contact element and/or the actuator, at the contact point (64) of the underside (54a) of the inner contact element (54) with the rotating actuator (18), has an average surface roughness Rz < 3.5 µm, preferably Rz < 2.5 µm, preferably in the range of Rz = 1.5 µm +/- 1 µm and/or a profile depth Pt < 6 µm, preferably Pt < 4.5 µm, preferably in the range of Pt = 3 µm +/- 1.5 µm.

6. Dental handpiece (10) according to one of claims 2 to 5, wherein the inner contact element (54) is made of a material with a thermal conductivity of less than or equal to 30 W/(mK), preferably in the range between 10 W/(mK) and 25 W/(mK), preferably in the range of 15 W/(mK) +/- 5 W/(mK), wherein the inner contact element (54) is made of metal, for example of a stainless martensitic alloy.

7. Dental handpiece (10) according to one of claims 2 to 6, wherein the inner contact element (54), in the region of the contact point (64) between the inner contact element (54) and the rotating actuator (18), has a thickness (h) which is less than or equal to 1 mm, preferably less than or equal to 0.6 mm, preferably less than or equal to 0.5 mm, preferably between 0.1 mm and 0.6 mm, preferably in the range of 0.4 mm +/- 0.2 mm.

8. Dental handpiece (10) according to one of claims 2 to 7, wherein the thermal insulation layer (80) has a thickness (H) of less than or equal to 0.5 mm, preferably less than or equal to 0.3 mm, preferably less than or equal to 0.2 mm, preferably between 0.01 mm and 0,2 mm, preferably in the range of 0.12 mm +/- 0.05 mm.

9. Dental handpiece (10) according to one of claims 2 to 8, wherein the inner contact element (54) has a peripheral support ring (126), a central actuation portion (124), and spokes (128), wherein the central actuation portion (124) is suspended in the peripheral support ring (126) by means of spokes (128), such that recesses (122) are formed between the spokes (128), and for example wherein the spokes (128) radially do not extend in a straight line.

10. Dental treatment unit (140) comprising a base unit (6) which provides at least one of compressed air, electrical energy, light, or water for one or more dental handpieces (10, 10'), at least one supply hose (4) with a coupling piece (2), and at least one dental handpiece (10, 10') according to one of claims 2 to 9, which can be coupled to the coupling piece (2).

## Patentansprüche

1. Manuell bedienbarer Druckknopf (36), der angepasst ist, um in einem Kopf (12) eines zahnärztlichen Handstücks (10) installiert zu werden,
wobei der Druckknopf (36) doppelwandig ist mit einer äußeren Abdeckplatte (42) und einem inneren Kontaktelement (54),
wobei der Druckknopf (36) hutförmig ist, sodass sich eine Umfangswand (48) von der äußeren Abdeckplatte (42) erstreckt,
wobei der Druckknopf (36) einen ringförmigen Anschlag (76, 112) an der äußeren Abdeckplatte (42) oder an der Umfangswand (48) aufweist,
wobei eine Wärmedämmschicht (80) durch einen zentralen Spalt (70) zwischen der äußeren Abdeckplatte (5) und der inneren Kontaktplatte (54) gebildet wird, sodass sich die Wärmedämmschicht (80) zwischen der äußeren Abdeckplatte (42) und dem inneren Kontaktelement (54) erstreckt und eine thermische Entkopplung der äußeren Abdeckplatte (42) von dem inneren Kontaktelement (54) bewirkt, wenn das innere Kontaktelement (54) auf dem ringförmigen Anschlag (76, 112) ruht,
wobei das innere Kontaktelement (54) als separates Teil von der äußeren Abdeckplatte (42) hergestellt ist,
wobei das innere Kontaktelement (54) lose in dem hutförmigen Druckknopf (36) liegt, oder das innere Kontaktelement (54) mittels einer Presspassung in den hutförmigen Druckknopf (36) eingedrückt ist, oder das innere Kontaktelement (54) mit dem hutförmigen Druckknopf (36) durch eine Klebeverbindung, zum Beispiel durch Schweißen, verbunden ist, und
sodass, wenn in dem inneren Kontaktelement (54) Reibungswärme erzeugt wird, diese in dem inneren Kontaktelement (54) überwiegend radial nach außen abgeleitet wird.

2. Zahnärztliches Handstück (10), das einen Kopf (12) zur Aufnahme von drehbaren zahnärztlichen Werkzeugen aufweist, umfassend:
ein Gehäuse (14) zur Unterbringung von Komponenten des Kopfes (12),
eine Werkzeugklemmvorrichtung (16), die in dem Gehäuse (14) untergebracht ist, um ein zahnärztliches Werkzeug einzuklemmen, sodass das eingeklemmte zahnärztliche Werkzeug in dem Kopf (12) drehbar antreibbar ist,
einen Auslösemechanismus zum Lösen der Klemmung des drehbaren zahnärztlichen Werkzeugs, um das zahnärztliche Werkzeug in die Werkzeugklemmvorrichtung (16) einzusetzen und das zahnärztliche Werkzeug aus der Werkzeugklemmvorrichtung (16) zu entfernen,
eine Vorspannung (56), die angepasst ist, um das innere Kontaktelement (54) gegen den ringförmigen Anschlag (76, 112) zu drücken,
einen manuell bedienbaren Druckknopf (36) **nach Anspruch 1** zur Betätigung des Auslösemechanismus,
wobei zur Betätigung des Druckknopfes (36) eine Oberseite (42b) der äußeren Abdeckplatte (42) durch einen Benutzer gegen die Vorspannung drückbar ist, wodurch
ein drehbarer Aktuator (18) durch eine Unterseite (54a) des inneren Kontaktelements (54) betätigt wird, um den Auslösemechanismus zu betätigen,
wobei die Reibungswärme, die in dem inneren Kontaktelement (54) erzeugt wird, wenn das innere Kontaktelement (54) den drehenden Aktuator (18) an einem Kontaktpunkt (64) berührt, in dem inneren Kontaktelement (54) überwiegend radial nach außen von dem Kontaktpunkt (64) abgeleitet wird.

3. Zahnärztliches Handstück (10) nach Anspruch 2, wobei die Wärmedämmschicht (80) in Form eines wärmedämmenden Spalts (78) bereitgestellt wird, der sich in einer Ebene quer zur Drehachse (38) des drehbaren zahnärztlichen Werkzeugs zwischen einer Unterseite (42a) der äußeren Abdeckplatte (42) und einer Oberseite (54b) des inneren Kontaktelements (54) erstreckt.

4. Zahnärztliches Handstück (10) nach einem der Ansprüche 2 oder 3, wobei die räumliche Ausdehnung der Wärmedämmschicht (80) in mindestens einer Richtung einer Ebene quer zu der Drehachse (38) des drehbaren zahnärztlichen Werkzeugs mindestens 40 %, vorzugsweise mindestens 50 %, vorzugsweise mindestens 70 %, des Durchmessers des Druckknopfes entspricht.

5. Zahnärztliches Handstück (10) nach einem der Ansprüche 2 bis 4, wobei das Material und die Verarbeitung des inneren Kontaktelements (54) und/oder des drehbaren Aktuators (18) so ausgewählt sind, dass das Kontaktelement und/oder der Aktuator an dem Kontaktpunkt (64) der Unterseite (54a) des inneren Kontaktelements (54) mit dem drehbaren Aktuator (18) eine durchschnittliche Oberflächenrauigkeit von Rz < 3,5 µm, vorzugsweise Rz < 2,5 µm, vorzugsweise im Bereich von Rz = 1,5 µm +/-1 µm und/oder eine Profiltiefe Pt < 6 µm, vorzugsweise Pt < 4,5 µm, vorzugsweise im Bereich von Pt = 3 µm +/-1,5 µm, aufweist.

6. Zahnärztliches Handstück (10) nach einem der Ansprüche 2 bis 5, wobei das innere Kontaktelement (54) aus einem Material mit einer Wärmeleitfähigkeit von weniger als oder gleich 30W/(mK), vorzugsweise im Bereich zwischen 10W/(mK) und 25W/(mK), vorzugsweise im Bereich von 15 W/(mK) +/- 5 W/(mK), hergestellt ist, wobei das innere Kontaktelement (54) aus Metall, beispielsweise aus einer rostfreien martensitischen Legierung, hergestellt ist.

7. Zahnärztliches Handstück (10) nach einem der Ansprüche 2 bis 6, wobei das innere Kontaktelement (54) im Bereich des Kontaktpunkts (64) zwischen dem inneren Kontaktelement (54) und dem drehbaren Aktuator (18) eine Dicke (h) aufweist, die kleiner oder gleich 1 mm, vorzugsweise kleiner oder gleich 0,6 mm, vorzugsweise kleiner oder gleich 0,5 mm, vorzugsweise zwischen 0,1 mm und 0,6 mm, vorzugsweise im Bereich von 0,4 mm +/- 0,2 mm, ist.

8. Zahnärztliches Handstück (10) nach einem der Ansprüche 2 bis 7, wobei die Wärmedämmschicht (80) eine Dicke (H) von weniger als oder gleich 0,5 mm, vorzugsweise weniger als oder gleich 0,3 mm, vorzugsweise weniger als oder gleich 0,2 mm, vorzugsweise zwischen 0,01 mm und 0,2 mm, vorzugsweise im Bereich von 0,12 mm +/- 0,05 mm, aufweist.

9. Zahnärztliches Handstück (10) nach einem der Ansprüche 2 bis 8, wobei das innere Kontaktelement (54) einen peripheren Stützring (126), einen zentralen Betätigungsabschnitt (124) und Speichen (128) aufweist, wobei der zentrale Betätigungsabschnitt (124) mittels Speichen (128) in dem peripheren Stützring (126) aufgehängt ist, sodass zwischen den Speichen (128) Ausschnitte (122) gebildet werden, und wobei sich die Speichen (128) beispielsweise radial nicht in einer geraden Linie erstrecken.

10. Zahnärztliche Behandlungseinheit (140), umfassend eine Basiseinheit (6), die mindestens eines von Druckluft, elektrischer Energie, Licht oder Wasser für ein oder mehrere zahnärztliche Handstücke (10, 10') bereitstellt, mindestens einen Versorgungsschlauch (4) mit einem Kupplungsstück (2), und mindestens ein zahnärztliches Handstück (10, 10') nach einem der Ansprüche 2 bis 9, das mit dem Kupplungsstück (2) gekoppelt werden kann.

## Revendications

1. Bouton poussoir actionnable manuellement (36) adapté à une installation dans une tête (12) d'une pièce à main dentaire (10),
le bouton poussoir (36) étant à double paroi avec une plaque de recouvrement extérieure (42) et un élément de contact intérieur (54),
le bouton poussoir (36) étant en forme de chapeau de sorte qu'une paroi circonférentielle (48) s'étend depuis la plaque de recouvrement extérieure (42),
le bouton poussoir (36) ayant une butée annulaire (76, 112) au niveau de la plaque de recouvrement extérieure (42) ou au niveau de la paroi circonférentielle (48),
dans lequel une couche d'isolation thermique (80) est formée par un espace central (70) entre la plaque de recouvrement extérieure (5) et la plaque de contact intérieure (54), de sorte que la couche d'isolation thermique (80) s'étend entre la plaque de recouvrement extérieure (42) et l'élément de contact intérieur (54) réalisant un découplage thermique de la plaque de recouvrement extérieure (42) de l'élément de contact intérieur (54), lorsque l'élément de contact intérieur (54) repose sur la butée annulaire (76, 112),
dans lequel l'élément de contact intérieur (54) est réalisé comme une pièce séparée de la plaque de recouvrement extérieur (42),
dans lequel l'élément de contact intérieur (54) est disposé librement dans le bouton poussoir (36) en forme de chapeau ou l'élément de contact intérieur (54) est enfoncé dans le bouton poussoir (36) en forme de chapeau au moyen d'un ajustement serré, ou l'élément de contact intérieur (54) est relié au bouton poussoir (36) en forme de chapeau par un joint collé, par exemple par soudage, et
de sorte que lorsque de la chaleur de frottement est générée dans l'élément de contact intérieur (54), elle est dissipée dans l'élément de contact intérieur (54) principalement radialement vers l'extérieur.

2. Pièce à main dentaire (10) ayant une tête (12) pour recevoir des outils dentaires rotatifs, comprenant :
un logement (14) pour loger des composants de la tête (12),
un dispositif de serrage d'outil (16) logé par le logement (14) pour serrer un outil dentaire de sorte que l'outil dentaire serré peut être entraîné en rotation dans la tête (12),
un mécanisme de déclenchement pour libérer le serrage de l'outil dentaire rotatif afin d'insérer l'outil dentaire dans le dispositif de serrage d'outil (16) et de retirer l'outil dentaire du dispositif de serrage d'outil (16),
une sollicitation (56) adaptée à la poussée de l'élément de contact intérieur (54) contre la butée annulaire (76, 112),
un bouton poussoir actionnable manuellement (36) **selon la revendication 1** pour actionner le mécanisme de déclenchement,
dans laquelle pour actionner le bouton poussoir (36) une face supérieure (42b) de la plaque de recouvrement extérieure (42) peut être pressé par un utilisateur contre la sollicitation, ce qui permet d'actionner
un actionneur rotatif (18) par une face inférieure (54a) de l'élément de contact intérieur (54) pour actionner le mécanisme de déclenchement,
dans laquelle la chaleur de frottement qui est générée dans l'élément de contact intérieur (54) lorsque l'élément de contact intérieur (54) entre en contact avec l'actionneur rotatif (18) au niveau d'un point de contact (64), est dissipée dans l'élément de contact intérieur (54) principalement radialement vers l'extérieur du point de contact (64).

3. Pièce à main dentaire (10) selon la revendication 2, dans laquelle la couche d'isolation thermique (80) est pourvue sous la forme d'un espace thermiquement isolant (78) qui s'étend dans un plan transversal à l'axe de rotation (38) de l'outil dentaire rotatif entre une face inférieure (42a) de la plaque de recouvrement extérieure (42) et une face supérieure (54b) de l'élément de contact intérieur (54).

4. Pièce à main dentaire (10) selon l'une des revendications 2 ou 3, dans laquelle l'extension spatiale de la couche d'isolation thermique (80) dans au moins une direction d'un plan transversal à l'axe de rotation (38) de l'outil dentaire rotatif correspond à au moins 40 %, de préférence au moins 50 %, de préférence au moins 70 %, du diamètre du bouton poussoir.

5. Pièce à main dentaire (10) selon l'une des revendications 2 à 4, dans laquelle le matériau et le traitement de l'élément de contact intérieur (54) et/ou de l'actionneur rotatif (18) sont choisis de sorte que l'élément de contact et/ou l'actionneur, au niveau du point de contact (64) de la face inférieure (54a) de l'élément de contact intérieur (54) avec l'actionneur rotatif (18), présente une rugosité de surface moyenne Rz < 3,5 µm, de préférence Rz < 2,5 µm, de préférence dans la plage de Rz = 1,5 µm +/- 1 µm et/ou une profondeur de profil Pt < 6 µm, de préférence Pt < 4,5 µm, de préférence dans la plage de Pt = 3 µm +/- 1,5 µm.

6. Pièce à main dentaire (10) selon l'une des revendications 2 à 5, dans laquelle l'élément de contact intérieur (54) est en un matériau doté d'une conductivité thermique inférieure ou égale à 30W/(mK), de préférence comprise dans la plage entre 10W/(mK) et 25 W/(mK), de préférence dans la plage de 15 W/(mK) +/- 5 W/(mK), dans laquelle l'élément de contact intérieur (54) est en métal, par exemple en un alliage martensitique inoxydable.

7. Pièce à main dentaire (10) selon l'une des revendications 2 à 6, dans laquelle l'élément de contact intérieur (54), dans la zone du point de contact (64) entre l'élément de contact intérieur (54) et l'actionneur rotatif (18), présente une épaisseur (h) qui est inférieure ou égale à 1 mm, de préférence inférieure ou égale à 0,6 mm, de préférence inférieure ou égale à 0,5 mm, de préférence comprise entre 0,1 mm et 0,6 mm, de préférence dans la plage de 0,4 mm +/- 0,2 mm.

8. Pièce à main dentaire (10) selon l'une des revendications 2 à 7, dans laquelle la couche d'isolation thermique (80) présente une épaisseur (H) inférieure ou égale à 0,5 mm, de préférence inférieure ou égale à 0,3 mm, de préférence inférieure ou égale à 0,2 mm, de préférence comprise entre 0,01 mm et 0,2 mm, de préférence dans la plage de 0,12 mm +/- 0,05 mm.

9. Pièce à main dentaire (10) selon l'une des revendications 2 à 8, dans laquelle l'élément de contact intérieur (54) comporte un anneau de support périphérique (126), une partie centrale d'actionnement (124) et des rayons (128), dans laquelle la partie centrale d'actionnement (124) est suspendue dans l'anneau de support périphérique (126) au moyen des rayons (128), de sorte que des évidements (122) sont formés entre les rayons (128), et par exemple dans laquelle les rayons (128) ne s'étendent pas radialement en ligne droite.

10. Unité de traitement dentaire (140) comprenant une unité de base (6) qui fournit au moins un parmi de l'air comprimé, de l'énergie électrique, de la lumière ou de l'eau à une ou plusieurs pièces à main dentaires (10, 10'), au moins un tuyau d'alimentation (4) doté d'une pièce de couplage (2), et au moins une pièce à main dentaire (10, 10') selon l'une des revendications 2 à 9, qui peut être couplée à la pièce de couplage (2).
